# EUROPEAN PATENT SPECIFICATION

(11) **EP 4 610 919 B1**
(45) Date of publication and mention of the grant of the patent: **26.08.2026**
(21) Application number: 23881745.6
(22) Date of filing: 20.10.2023
(51) Int. Cl.: G06T 3/40

(54) **IMAGE PROCESSING METHOD AND DEVICE, TERMINAL AND MEDIUM**
BILDVERARBEITUNGSVERFAHREN UND -VORRICHTUNG, ENDGERÄT UND MEDIUM
PROCÉDÉ ET DISPOSITIF DE TRAITEMENT D'IMAGE, TERMINAL ET SUPPORT

(30) Priority: 24.10.2022 CN 202211301775
(43) Date of publication of application: 03.09.2025
(73) Proprietor: Nio Smart Technology Co., Ltd., Shanghai 201800 (CN)
(72) Inventor: LIAO, Shengyang, Shanghai 201804 (CN)
(74) Representative: Vossius & Partner Patentanwälte Rechtsanwälte mbB
(86) International application number: PCT/CN2023/125630
(87) International publication number: WO 2024/088167

(56) References cited:
- CN-A- 110 602 401
- CN-A- 110 765 926
- CN-A- 111 401 266
- CN-A- 112 399 065
- CN-A- 113 850 238
- CN-A- 113 850 238
- CN-A- 114 663 287
- US-A1- 2012 113 489
- US-A1- 2012 113 489
- US-A1- 2014 032 406
- US-A1- 2014 032 406

## Description

This application claims priority of the Chinese patent application 202211301775.3 filed October 24, 2022 and entitled "Image Processing Method and Device, Terminal and Medium".

### TECHNICAL FIELD

The present invention relates to the technical field of image processing, and particularly provides an image processing method and device, a terminal and a medium.

### BACKGROUND

With the popularization and development of the Internet, the needs of people for the functions of terminal devices are becoming more and more diversified. For example, in order to meet the needs of users to view documents at any time on terminal devices, many terminal devices may support a document shooting function. For example, a user can use the document shooting function to shoot document pictures, achieving functions such as searching for questions online or extracting characters from the pictures.

An image shot by a terminal device in a document shooting mode may be too large or too small, which is inconsistent with the actual needs of the user. Currently, it is common to manually adjust the size of images. However, manual adjustment of images brings inconvenience to the user and is difficult to find an appropriate scaling ratio, resulting in poor image display effects.

### SUMMARY

In order to overcome the above defects, the present invention is proposed to provide an image processing method and device, a terminal and a medium, which can solve or at least partially solve the technical problems that manual adjustment of images brings inconvenience to the user and is difficult to find an appropriate zoom ratio, resulting in poor image display effects.

In a first aspect, the present invention provides an image processing method, including:
obtaining a plurality of initial corner points of a current frame image of a target document;
filtering the plurality of initial corner points within a range formed by a preset polygon to obtain a plurality of available corner points of the current frame image, where the number of the available corner points is equal to the number of corners of the preset polygon;
determining a first distance between any two of the available corner points, and obtaining, based on all the first distances, a maximum distance in each direction corresponding to the preset polygon, where each direction corresponding to the preset polygon is determined based on an extension direction of each edge of the preset polygon;
determining a scaling coefficient in each direction based on the maximum distance in each direction; and
if each scaling coefficient is greater than a corresponding coefficient threshold, determining a scaling coefficient of the current frame image based on each scaling coefficient and its corresponding coefficient threshold, and performing scaling on the current frame image to obtain a target image.

Further, in the above image processing method, the filtering the plurality of initial corner points within a range formed by a preset polygon to obtain a plurality of available corner points of the current frame image includes:
performing median filtering in a spatial domain on the plurality of initial corner points within the range formed by the preset polygon to obtain a plurality of candidate corner points of the current frame image;
if the frame number corresponding to the current frame image is greater than or equal to a preset frame number, and the number of the candidate corner points of the current frame image is equal to the number of corners of the preset polygon, determining a second distance between each candidate corner point of the current frame image and a corresponding candidate corner point of a previous frame image; and
if the maximum second distance is less than a preset distance, performing median filtering in a time domain on candidate corner points of a plurality of frame images within the range formed by the preset polygon to obtain the plurality of available corner points of the current frame image, where the plurality of frame images include the current frame image and at least two frame images prior to the current frame image.

Further, the above image processing method also includes:
if each scaling coefficient is greater than the corresponding coefficient threshold, updating numerical values corresponding to the candidate corner points of the current frame image to numerical values corresponding to the plurality of available corner points of the current frame image.

Further, in the above image processing method, the determining a scaling coefficient of the current frame image based on each scaling coefficient and its corresponding coefficient threshold, and performing scaling on the current frame image to obtain a target image includes:
determining a ratio of each coefficient threshold to a corresponding scaling coefficient, selecting the minimum ratio as a scaling coefficient of the current frame image, and performing scaling on the current frame image to obtain a target image.

Further, the above image processing method also includes:
storing the scaling coefficient of the current frame image.

Further, in the above image processing method, the obtaining a plurality of initial corner points of a current frame image includes:
based on a scaling coefficient or preset scaling coefficient corresponding to the previous frame image, performing scaling on the current frame image to obtain a scaled current frame image; and
based on a preset corner point detection algorithm, obtaining a plurality of initial corner points of the scaled current frame image.

Further, in the above image processing method, the determining a scaling coefficient in each direction based on the maximum distance in each direction includes:
setting a ratio of the maximum distance to an edge length in a corresponding direction as a scaling coefficient in the corresponding direction.

In a second aspect, the present invention provides an image processing device, including a processor and a storage device, where the storage device is configured to store a plurality of program codes, which are configured to be loaded and executed by the processor to perform the image processing method of any one of claims 1 to 7.

In a third aspect, provided is a terminal, including the image processing device as described above.

In a fourth aspect, provided is a computer-readable storage medium storing a plurality of program codes thereon, where the program codes are configured to be loaded and executed by a processor to perform the image processing method of any one of the above technical solutions.

The above one or more technical solutions of the present invention have at least one or more beneficial effects as follows:
In the technical solutions implementing the present invention, after obtaining a plurality of initial corner points of a current frame image of a target document, and filtering the plurality of initial corner points within a range formed by a preset polygon to obtain a plurality of available corner points of the current frame image, a first distance between any two of the available corner points is determined, and based on all the first distances, a maximum distance in each direction corresponding to the preset polygon is obtained; then, a scaling coefficient in each direction is determined based on the maximum distance in each direction, and when each scaling coefficient is greater than a corresponding coefficient threshold, a scaling coefficient is selected, and scaling is performed on the current frame image to obtain a target image. The image display aspect ratio of the target document is dynamically adjusted, bringing convenience to users; the image display aspect ratio is adjusted to be more accurate than manual adjustment, thereby improving the image display effect and the user experience.

### BRIEF DESCRIPTION OF DRAWINGS

The disclosure of the present invention will become easier to understand with reference to the accompanying drawings. It is easy for those skilled in the art to understand that these accompanying drawings are only for illustrative purposes and are not intended to limit the scope of protection of the present invention. In addition, similar reference numerals in the drawings are used to represent similar components, in which:
FIG. 1 is a schematic flowchart of main steps of an image processing method according to an embodiment of the present invention;
FIG. 2 is a schematic diagram of determining candidate corner points of a current frame image of a target document;
FIG. 3 is a schematic diagram of determining available corner points of the current frame image of the target document;
FIG. 4 is a schematic flowchart of main steps of an image processing method according to another embodiment of the present invention;
FIG. 5 shows an adaptively adjusted image corresponding to part (1) in FIG. 2; and
FIG. 6 is a main structural block diagram of an image processing device according to an embodiment of the present invention.

### DETAILED DESCRIPTION

Some implementations of the present invention will be described below with reference to the accompanying drawings. It should be understood by those skilled in the art that these implementations are only used to explain the technical principles of the present invention and are not intended to limit the scope of protection of the present invention.

In the description of the present invention, "module" or "processor" may include hardware, software, or a combination of both. A module may include hardware circuits, various suitable sensors, communication ports and memories, and may also include software components such as program codes, or a combination of software and hardware. The processor may be a central processor, a microprocessor, an image processor, a digital signal processor, or any other suitable processors. The processor has a data and/or signal processing function. The processor may be implemented in software, hardware, or a combination of both. A non-transitory computer-readable storage medium includes any suitable medium that may store program codes, such as magnetic disk, hard disk, optical disk, flash memory, read-only memory, and random access memory. The term "A and/or B" refers to all possible combinations of A and B, such as just A, just B, or A and B. The term "at least one A or B" or "at least one of A and B" has a similar meaning to "A and/or B", and may include just A, just B, or A and B. The singular terms "a", "an" and "the" may further include the plural forms.

An image shot by a terminal device in a document shooting mode may be too large or too small, which is inconsistent with the actual needs of the user. Currently, it is common to manually adjust the size of images. However, manual adjustment of images brings inconvenience to the user and is difficult to find an appropriate scaling ratio, resulting in poor image display effects.

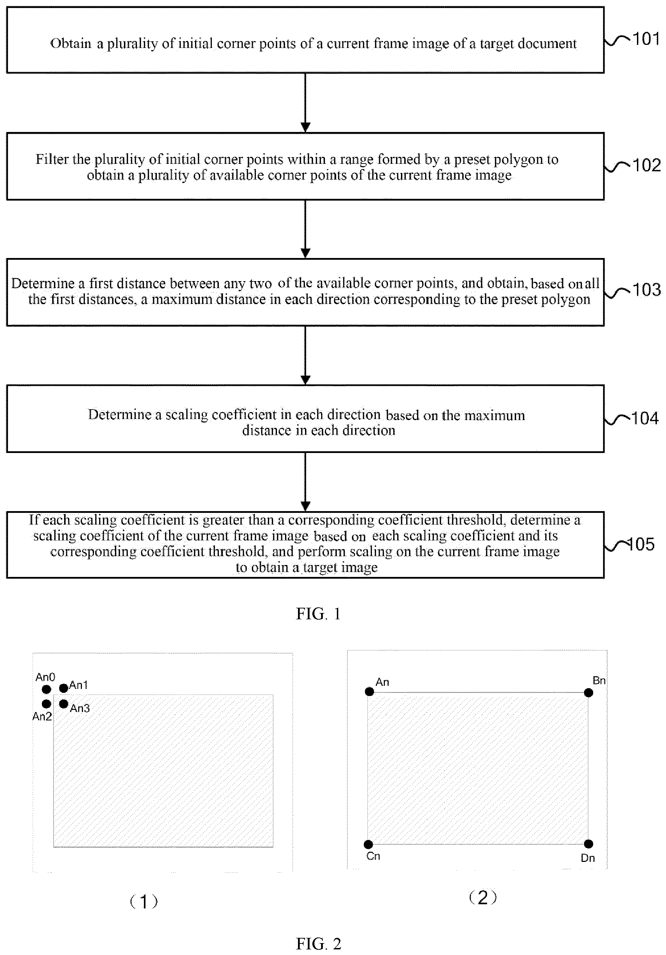

Therefore, in order to solve the above technical problems, the present invention provides the following technical solutions:
Reference is made to FIG. 1, which is a schematic flowchart of main steps of an image processing method according to an embodiment of the present invention. As shown in FIG. 1, the image processing method in an embodiment of the present invention mainly includes the following steps 101-105.

Step 101, Obtain a plurality of initial corner points of a current frame image of a target document.

In a specific implementation process, after a camera of a terminal device enters a document mode, sequential frame images of the target document frame by frame (images of frames 0, 1, 2... N-1, N, N+1...) may be obtained. After obtaining the current frame image, a plurality of initial corner points of the current frame image may be obtained.

Specifically, based on a scaling coefficient or preset scaling coefficient corresponding to a previous frame image, scaling may be performed on the current frame image to obtain a scaled current frame image, and based on a preset corner point detection algorithm, a plurality of initial corner points of the scaled current frame image may be obtained. The scaling coefficient corresponding to the previous frame image is a coefficient used for scaling the previous frame image. The preset scaling coefficient may be manually set, usually may be set to 1, which means the image is not scaled. For the preset corner point detection algorithm, a required method may be selected with reference to the existing related art, which will not be specifically limited in this embodiment.

Step 102, Filter the plurality of initial corner points within a range formed by a preset polygon to obtain a plurality of available corner points of the current frame image.

In a specific implementation process, a range formed by a preset polygon may be selected from the current frame image, and a plurality of initial corner points in this range may be filtered to obtain a plurality of available corner points of the current frame image. The number of the available corner points is equal to the number of corners of the preset polygon. For example, the preset polygon may be a square, and the number of the available corner points may be four.

Specifically, the implementation step may be implemented according to the following steps:
a. Perform median filtering in a spatial domain on the plurality of initial corner points within the range formed by the preset polygon to obtain a plurality of candidate corner points of the current frame image.
   FIG. 2 is a schematic diagram of determining candidate corner points of a current frame image of a target document. In FIG. 2, the preset polygon is taken as a square as an example for illustration. The current frame image has four candidate corner points, denoted as An, Bn, Cn, and Dn respectively, as shown in part (2) in FIG. 2. Part (1) in FIG. 2 shows four initial corner points An0, An1, An2, and An3 corresponding to the first candidate corner point An of the current frame image. After performing median filtering in a spatial domain on the four initial corner points An0, An1, An2, and An3, the first candidate corner point An may be obtained. Similarly, other candidate corner points Bn, Cn and Dn may be obtained, which will not be exemplified one by one here. The middle blocks of parts (1) and (2) in FIG. 2 represent images, and the outer blocks represent preset squares.
b. If the frame number corresponding to the current frame image is greater than or equal to a preset frame number, and the number of the candidate corner points of the current frame image is equal to the number of corners of the preset polygon, determine a second distance between each candidate corner point of the current frame image and a corresponding candidate corner point of a previous frame image.

In a specific implementation process, it is obtained that the number of the plurality of candidate corner points of the current frame image may actually not be consistent with the number of corners of the preset polygon. Therefore, it is necessary to detect whether the number of the plurality of candidate corner points of the current frame image is equal to the number of corners of the preset polygon. In addition, when median filtering in a time domain is performed, at least three frame images are usually needed. Therefore, it is also necessary to detect that the frame number corresponding to the current frame image is greater than or equal to the preset frame number, where the preset frame number may be greater than or equal to three. Only when the frame number corresponding to the current frame image is greater than or equal to the preset frame number, and the number of the candidate corner points of the current frame image is equal to the number of corners of the preset polygon, a plurality of available corner points of the current frame image may be further obtained.

Specifically, if the frame number corresponding to the current frame image is greater than or equal to the preset frame number, and the number of the candidate corner points of the current frame image is equal to the number of corners of the preset polygon, a second distance between each candidate corner point of the current frame image and a corresponding candidate corner point of a previous frame image may be determined.

For example, if the candidate corner points of the previous frame image may be An-1, Bn-1, Cn-1, and Dn-1, then the second distances between all candidate corner points of the current frame image and corresponding candidate corner points of the previous frame image may be denoted as |An An-1|, |Bn Bn-1|, |Cn Cn-1|, and |Dn Dn-1|.

It needs to be noted that if the frame number corresponding to the current frame image is less than the preset frame number, or if the number of the candidate corner points of the current frame image is equal to the number of corners of the preset polygon, the method may return to step 101.

c. If the maximum second distance is less than a preset distance, perform median filtering in a time domain on candidate corner points of a plurality of frame images within the range formed by the preset polygon to obtain a plurality of available corner points of the current frame image.

In a specific implementation process, the maximum value among |An An-1|, |Bn Bn-1|, |Cn Cn-1| and |Dn Dn-1| may be calculated as a maximum second distance maxDis, and then it may be determined whether the maximum second distance maxDis is less than a preset distance TreDis. If the maximum second distance maxDis is less than the preset distance TreDis, median filtering in a time domain is performed on candidate corner points of a plurality of frame images within the range formed by the preset polygon to obtain a plurality of available corner points of the current frame image, where the plurality of frame images include the current frame image and at least two frame images prior to the current frame image.

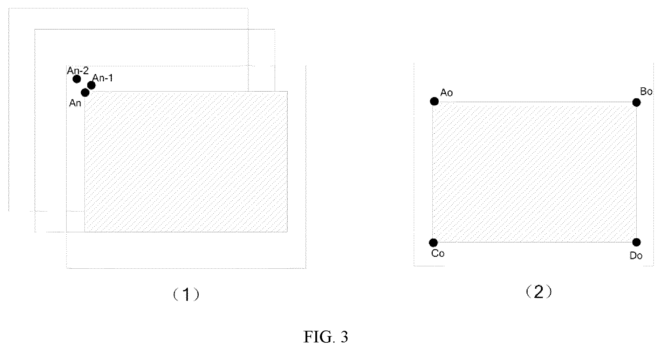

FIG. 3 is a schematic diagram of determining available corner points of a current frame image of a target document. As shown in FIG. 3, part (1) in FIG. 3 shows three candidate corner points An-2, An-1, and An from frame N-2 to frame N. After median filtering in a time domain is performed on the three candidate corner points An-2, An-1, and An, a first available corner point Ao in part (2) in FIG. 3 may be obtained. Similarly, other available corner points Bo, Co, and Do in part (2) in FIG. 3 may be obtained.

It needs to be noted that if the maximum second distance is greater than or equal to the preset distance, the method may return to step 101.

Step 103, Determine a first distance between any two of the available corner points, and obtain, based on all the first distances, a maximum distance in each direction corresponding to the preset polygon.

In a specific implementation process, a first distance between any two of the available corner points may be determined, and a maximum distance in each direction corresponding to the preset polygon may be obtained based on all the first distances, where each direction corresponding to the preset polygon is determined based on an extension direction of each edge of the preset polygon.

Specifically, if the preset polygon is a square, then all the directions corresponding to the preset polygon are length and width directions. Referring to FIG. 3, first distances |AoBo|, |AoCo|, |CoDo|, and |BoDo| between available corner points may be calculated. The maximum first distance in the width direction, maxW=max(|AoBo|, |CoDo|), and the maximum first distance in the height direction, maxH=max(|AoCo|, |BoDo|), may be calculated. If the preset polygon is a triangle, then all the directions corresponding to the preset polygon are the directions corresponding to the three edges, which will not be illustrated one by one here.

Step 104, Determine a scaling coefficient in each direction based on the maximum distance in each direction.

Specifically, a ratio of the maximum distance to an edge length in a corresponding direction may be taken as a scale coefficient in the corresponding direction. Referring to FIG. 3, a width direction scaling coefficient rw=maxW/IW and a height direction scaling coefficient rh=maxH/IH may be calculated, where IW is a width of the current image frame, and IH is a length of the current image frame.

Step 105, If each scaling coefficient is greater than a corresponding coefficient threshold, determine a scaling coefficient of the current frame image based on each scaling coefficient and its corresponding coefficient threshold, and perform scaling on the current frame image to obtain a target image.

In a specific implementation process, it is possible to sequentially determine whether each scaling coefficient is greater than a corresponding coefficient threshold. If each scaling coefficient is greater than the corresponding coefficient threshold, a scaling coefficient of the current frame image may be determined based on each scaling coefficient and its corresponding coefficient threshold, and scaling may be performed on the current frame image to obtain a target image. If at least one scaling coefficient is less than or equal to the corresponding coefficient threshold, the method may return to step 101.

In a specific implementation process, a ratio of each coefficient threshold to a corresponding scaling coefficient may be determined, the minimum ratio may be selected as a scaling coefficient of the current frame image, and scaling may be performed on the current frame image to obtain a target image. In this way, the phenomenon that the image is scaled up too much or the image is still large after being scaled down is avoided, thereby better meeting the actual needs of the user.

According to the image processing method in this embodiment, after obtaining a plurality of initial corner points of a current frame image of a target document, and filtering the plurality of initial corner points within a range formed by a preset polygon to obtain a plurality of available corner points of the current frame image, a first distance between any two of the available corner points is determined, and based on all the first distances, a maximum distance in each direction corresponding to the preset polygon is obtained; then, a scaling coefficient in each direction is determined based on the maximum distance in each direction, and when each scaling coefficient is greater than a corresponding coefficient threshold, a scaling coefficient is selected, and scaling is performed on the current frame image to obtain a target image. The image display aspect ratio of the target document is dynamically adjusted, bringing convenience to users; the image display aspect ratio is adjusted to be more accurate than manual adjustment, thereby improving the image display effect and the user experience.

In a specific implementation process, the scaling coefficient of the current frame image may also be stored, so that when a next frame image is obtained, scaling may be performed on the next frame image according to the scaling coefficient of the current frame image, and then a plurality of initial corner points of the next frame image may be obtained.

In a specific implementation process, if each scaling coefficient is greater than a corresponding coefficient threshold, numerical values corresponding to the candidate corner points of the current frame image are updated to numerical values corresponding to the plurality of available corner points of the current frame image, so that when scaling is performed on the next frame image, median filtering may be performed on the next frame image using the candidate corner points of the current frame image.

The specific application of the processing method of the present invention will be illustrated below in conjunction with FIGS. 2 and 3.

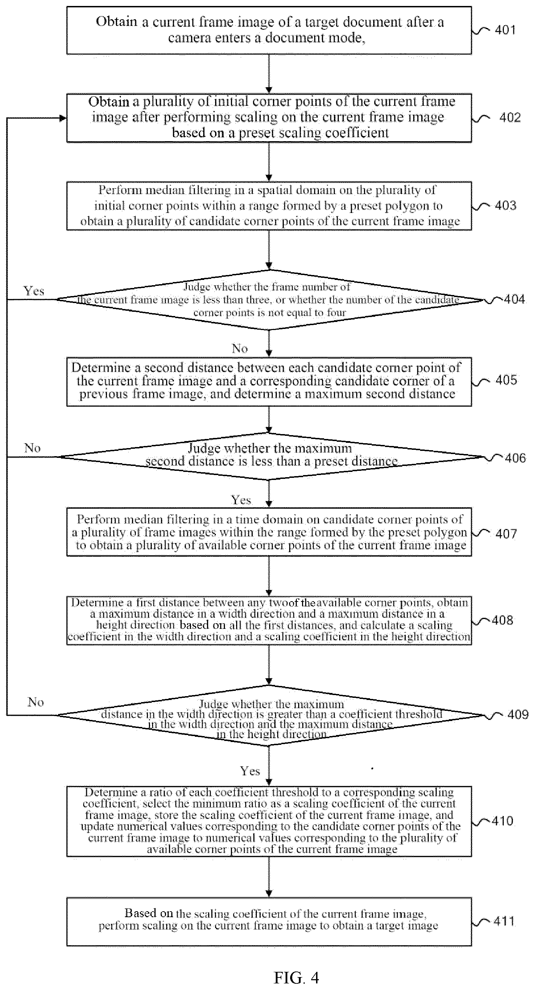

FIG. 4 is a schematic flowchart of main steps of an image processing method according to another embodiment of the present invention. As shown in FIG. 4, the image processing method in an embodiment of the present invention mainly includes the following steps 401-411.

Step 401, Obtain a current frame image of a target document, after a camera enters a document mode.

Step 402, Obtain a plurality of initial corner points of the current frame image after performing scaling on the current frame image according to a preset scaling coefficient.

Step 403, Perform median filtering in a spatial domain on the plurality of initial corner points within a range formed by a preset polygon to obtain a plurality of candidate corner points of the current frame image.

Step 404, Judge whether the frame number of the current frame image is less than three, or whether the number of the candidate corner points is not equal to four; if so, return to step 402; otherwise, proceed to step 405.

Step 405, Determine a second distance between each candidate corner point of the current frame image and a corresponding candidate corner of a previous frame image, and determine a maximum second distance.

Step 406, Judge whether the maximum second distance is less than a preset distance; if so, proceed to step 407; otherwise, return to step 402.

Step 407, Perform median filtering in a time domain on candidate corner points of a plurality of frame images within the range formed by the preset polygon to obtain a plurality of available corner points of the current frame image.

Step 408, Determine a first distance between any two of the available corner points, and obtain a maximum distance in a width direction and a maximum distance in a height direction based on all the first distances; and calculate a scaling coefficient in the width direction and a scaling coefficient in the height direction.

Step 409, Judge whether the maximum distance in the width direction is greater than a coefficient threshold in the width direction and the maximum distance in the height direction; if so, proceed to step 410; otherwise, return to step 402.

Step 410, Determine a ratio of each coefficient threshold to a corresponding scaling coefficient, select the minimum ratio as a scaling coefficient of the current frame image, and store the scaling coefficient of the current frame image; and update numerical values corresponding to the candidate corner points of the current frame image to numerical values corresponding to the plurality of available corner points of the current frame image.

Step 411, According to the scaling coefficient of the current frame image, perform scaling on the current frame image to obtain a target image.

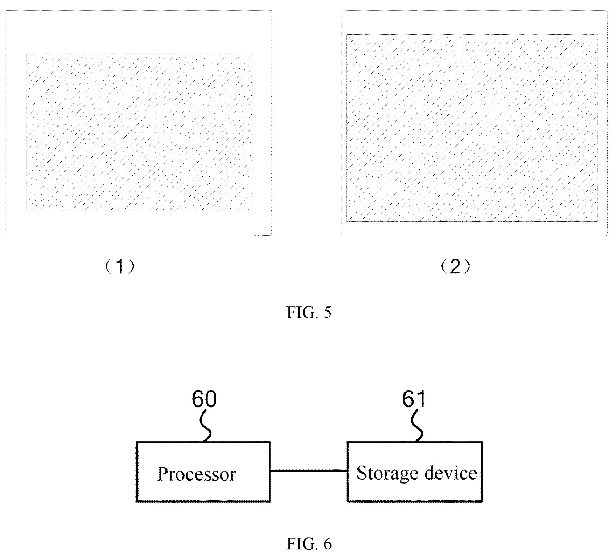

FIG. 5 shows an adaptively adjusted image corresponding to part (1) in FIG. 2. Part (1) in FIG. 5 is an original image of the current frame image, and part (2) in FIG. 5 is an enlarged image of the current frame image.

It needs to be pointed out that although various steps are described in a specific order in the above embodiments, those skilled in the art will appreciate that in order to achieve the effects of the present invention, different steps need not to be executed in this order, but can be executed simultaneously (in parallel) or in other order, and these changes are within the scope of protection of the present invention.

Those skilled in the art will appreciate that all or some of the processes in the method for implementing the above embodiment of the present invention may also be completed by instructing relevant hardware through a computer program. The computer program may be stored in a computer-readable storage medium. When the computer program is executed by a processor, the steps of the above various method embodiments may be implemented. The computer program includes computer program code, which may be in the form of source code, object code, executable file, or some intermediate forms, etc. The computer-readable storage medium may include: any entity or apparatus, medium, USB flash disk, mobile hard disk, magnetic disk, optical disk, computer memory, read-only memory, random access memory, electrical carrier signal, telecommunication signal, and software distribution medium, etc. which can carry the computer program code. It needs to be noted that the content contained in the computer-readable storage medium can be appropriately added or removed according to the requirements of legislation and patent practice within the jurisdiction. For example, in some jurisdictions, according to legislation and patent practice, computer-readable storage media do not include electrical carrier signals and telecommunication signals.

Furthermore, the present invention also provides an image processing device.

Reference is made to FIG. 6, which is a main structural block diagram of an image processing device according to an embodiment of the present invention. As shown in FIG. 6, the image processing device in an embodiment of the present invention may include a processor 60 and a storage device 61.

The storage device 61 may be configured to store a program for executing the image processing method in the above method embodiments. The processor 60 may be configured to execute a program in the storage device 61, where the program includes but is not limited to the program for executing the image processing method in the above method embodiments. For ease of explanation, only the parts related to the embodiments of the present invention are shown. For specific technical details not disclosed, reference is made to the method parts in the embodiments of the present invention. The image processing device may be a control device formed consisting of various electronic devices.

Further, the present invention also provides a terminal, including the image processing device described in the above embodiment.

Further, the present invention also provides a computer-readable storage medium. In a computer-readable storage medium embodiment according to the present invention, the computer-readable storage medium may be configured to store a program for executing the image processing method in the above method embodiments, and the program may be loaded and executed by a processor to implement the above image processing method. For ease of explanation, only the parts related to the embodiments of the present invention are shown. For specific technical details not disclosed, reference is made to the method parts in the embodiments of the present invention. The computer-readable storage medium may be a storage device formed consisting of various electronic devices. Optionally, in an embodiment of the present invention, the computer-readable storage medium is a non-temporary computer-readable storage medium.

Further, it should be understood that since the settings of various modules are merely intended to illustrate the functional units of the apparatus of the present invention, the physical devices corresponding to these modules may be the processor itself, or a part of software, hardware or a combination of software and hardware in the processor. Therefore, the number of various modules in the figures is merely illustrative.

Those skilled in the art will appreciate that various modules in the apparatus may be adaptively split or merged. Such splitting or merging performed on specific modules will not cause the technical solutions to deviate from the principles of the present invention. Therefore, all the technical solutions after splitting or merging will fall within the scope of protection of the present invention.

So far, the technical solutions of the present invention have been described in conjunction with the preferred embodiments shown in the accompanying drawings. However, it is easy for those skilled in the art to understand that the scope of protection of the present invention is obviously not limited to these specific implementations.

## Claims

1. An image processing method comprising:
obtaining a plurality of initial corner points of a current frame image of a target document;
filtering the plurality of initial corner points within a range formed by a preset polygon to obtain a plurality of available corner points of the current frame image, wherein the number of the available corner points is equal to the number of corners of the preset polygon;
determining a first distance between any two of the available corner points, and obtaining, based on all the first distances, a maximum distance in each direction corresponding to the preset polygon, wherein each direction corresponding to the preset polygon is determined based on an extension direction of each edge of the preset polygon;
determining a scaling coefficient in each direction based on the maximum distance in each direction; and
if each scaling coefficient is greater than a corresponding coefficient threshold, determining a scaling coefficient of the current frame image based on each scaling coefficient and its corresponding coefficient threshold, and performing scaling on the current frame image to obtain a target image.

2. The image processing method according to claim 1, **characterized in that** the filtering the plurality of initial corner points within a range formed by a preset polygon to obtain a plurality of available corner points of the current frame image comprises:
performing median filtering in a spatial domain on the plurality of initial corner points within the range formed by the preset polygon to obtain a plurality of candidate corner points of the current frame image;
if the frame number corresponding to the current frame image is greater than or equal to a preset frame number, and the number of the candidate corner points of the current frame image is equal to the number of corners of the preset polygon, determining a second distance between each candidate corner point of the current frame image and a corresponding candidate corner point of a previous frame image; and
if the maximum second distance is less than a preset distance, performing median filtering in a time domain on candidate corner points of a plurality of frame images within the range formed by the preset polygon to obtain the plurality of available corner points of the current frame image, wherein the plurality of frame images include the current frame image and at least two frame images prior to the current frame image.

3. The image processing method according to claim 1 or 2, **characterized in that** the method further comprises:
if each scaling coefficient is greater than the corresponding coefficient threshold, updating numerical values corresponding to the candidate corner points of the current frame image to numerical values corresponding to the plurality of available corner points of the current frame image.

4. The image processing method according to any one of claims 1 to 3, **characterized in that** the determining a scaling coefficient of the current frame image based on each scaling coefficient and its corresponding coefficient threshold, and performing scaling on the current frame image to obtain a target image comprises:
determining a ratio of each coefficient threshold to a corresponding scaling coefficient, selecting the minimum ratio as a scaling coefficient of the current frame image, and performing scaling on the current frame image to obtain the target image.

5. The image processing method according to claim 4, **characterized in that** the method further comprises:
storing the scaling coefficient of the current frame image.

6. The image processing method according to any one of claims 1 to 5, **characterized in that** the obtaining a plurality of initial corner points of a current frame image of a target document comprises:
based on the scaling coefficient or preset scaling coefficient corresponding to the previous frame image, performing scaling on the current frame image to obtain a scaled current frame image; and
based on a preset corner point detection algorithm, obtaining a plurality of initial corner points of the scaled current frame image.

7. The image processing method according to any one of claims 1 to 6, **characterized in that** the determining a scaling coefficient in each direction based on the maximum distance in each direction comprises:
setting a ratio of the maximum distance to an edge length in a corresponding direction as a scaling coefficient in the corresponding direction.

8. An image processing device, comprising a processor and a storage device, wherein the storage device is configured to store a plurality of program codes, **characterized in that** the program codes are configured to be loaded and executed by the processor to perform the image processing method of any one of claims 1 to 7.

9. A terminal, **characterized in that** the terminal comprises the image processing device of claim 8.

10. A non-transitory computer-readable storage medium storing a plurality of program codes thereon, **characterized in that** the program codes are configured to be loaded and executed by a processor to perform the image processing method of any one of claims 1 to 7.

## Patentansprüche

1. Bildverarbeitungsverfahren, das Folgendes umfasst:
Erhalten einer Mehrzahl von anfänglichen Eckpunkten eines aktuellen Framebildes eines Zieldokuments;
Filtern der Mehrzahl von anfänglichen Eckpunkten innerhalb eines durch ein voreingestelltes Polygon gebildeten Bereichs, um eine Mehrzahl von verfügbaren Eckpunkten des aktuellen Framebildes zu erhalten, wobei die Anzahl der verfügbaren Eckpunkte gleich der Anzahl von Ecken des voreingestellten Polygons ist;
Bestimmen eines ersten Abstands zwischen beliebigen zwei der verfügbaren Eckpunkte, und Erhalten, basierend auf allen ersten Abständen, eines maximalen Abstands in jeder Richtung, die dem voreingestellten Polygon entspricht, wobei jede Richtung, die dem voreingestellten Polygon entspricht, basierend auf einer Ausdehnungsrichtung jeder Kante des voreingestellten Polygons bestimmt wird;
Bestimmen eines Skalierungskoeffizienten in jeder Richtung basierend auf dem maximalen Abstand in jeder Richtung; und
falls jeder Skalierungskoeffizient größer als ein entsprechender Koeffizientenschwellenwert ist, Bestimmen eines Skalierungskoeffizienten des aktuellen Framebildes basierend auf jedem Skalierungskoeffizienten und seinem entsprechenden Koeffizientenschwellenwert, und Durchführen einer Skalierung an dem aktuellen Framebild, um ein Zielbild zu erhalten.

2. Bildverarbeitungsverfahren nach Anspruch 1, **dadurch gekennzeichnet, dass** das Filtern der Mehrzahl von anfänglichen Eckpunkten innerhalb eines durch ein voreingestelltes Polygon gebildeten Bereichs, um eine Mehrzahl von verfügbaren Eckpunkten des aktuellen Framebildes zu erhalten, Folgendes umfasst:
Durchführen einer Medianfilterung in einer räumlichen Domäne an den Mehrzahl von anfänglichen Eckpunkten innerhalb des durch das voreingestellte Polygon gebildeten Bereichs, um eine Mehrzahl von Kandidateneckpunkten des aktuellen Framebildes zu erhalten;
falls die dem aktuellen Framebild entsprechende Frameanzahl größer oder gleich einer voreingestellten Frameanzahl ist und die Anzahl der Kandidateneckpunkte des aktuellen Framebildes gleich der Anzahl von Ecken des voreingestellten Polygons ist, Bestimmen eines zweiten Abstands zwischen jedem Kandidateneckpunkt des aktuellen Framebildes und einem entsprechenden Kandidateneckpunkt eines vorherigen Framebildes; und
falls der maximale zweite Abstand kleiner als ein voreingestellter Abstand ist, Durchführen einer Medianfilterung in einer Zeitdomäne an Kandidateneckpunkten einer Mehrzahl von Framebildern innerhalb des durch das voreingestellte Polygon gebildeten Bereichs, um die Mehrzahl von verfügbaren Eckpunkten des aktuellen Framebildes zu erhalten, wobei die Mehrzahl von Framebildern das aktuelle Framebild und mindestens zwei Framebilder vor dem aktuellen Framebild beinhaltet.

3. Bildverarbeitungsverfahren nach Anspruch 1 oder 2, **dadurch gekennzeichnet, dass** das Verfahren ferner Folgendes umfasst:
falls jeder Skalierungskoeffizient größer als der entsprechende Koeffizientenschwellenwert ist, Aktualisieren von numerischen Werten, die den Kandidateneckpunkten des aktuellen Framebildes entsprechen, auf numerische Werte, die der Mehrzahl von verfügbaren Eckpunkten des aktuellen Framebildes entsprechen.

4. Bildverarbeitungsverfahren nach einem der Ansprüche 1 bis 3, **dadurch gekennzeichnet, dass** das Bestimmen eines Skalierungskoeffizienten des aktuellen Framebildes basierend auf jedem Skalierungskoeffizienten und seinem entsprechenden Koeffizientenschwellenwert, und Durchführen einer Skalierung an dem aktuellen Framebild, um ein Zielbild zu erhalten, Folgendes umfasst:
Bestimmen eines Verhältnisses jedes Koeffizientenschwellenwerts zu einem entsprechenden Skalierungskoeffizienten, Auswählen des minimalen Verhältnisses als einen Skalierungskoeffizienten des aktuellen Framebildes, und Durchführen einer Skalierung an dem aktuellen Framebild, um das Zielbild zu erhalten.

5. Bildverarbeitungsverfahren nach Anspruch 4, **dadurch gekennzeichnet, dass** das Verfahren ferner Folgendes umfasst:
Speichern des Skalierungskoeffizienten des aktuellen Framebildes.

6. Bildverarbeitungsverfahren nach einem der Ansprüche 1 bis 5, **dadurch gekennzeichnet, dass** das Erhalten einer Mehrzahl von anfänglichen Eckpunkten eines aktuellen Framebildes eines Zieldokuments Folgendes umfasst:
basierend auf dem Skalierungskoeffizienten oder dem voreingestellten Skalierungskoeffizienten, der dem vorherigen Framebild entspricht, Durchführen einer Skalierung an dem aktuellen Framebild, um ein skaliertes aktuelles Framebild zu erhalten; und
basierend auf einem voreingestellten Eckpunktdetektionsalgorithmus, Erhalten einer Mehrzahl von anfänglichen Eckpunkten des skalierten aktuellen Framebildes.

7. Bildverarbeitungsverfahren nach einem der Ansprüche 1 bis 6, **dadurch gekennzeichnet, dass** das Bestimmen eines Skalierungskoeffizienten in jeder Richtung basierend auf dem maximalen Abstand in jeder Richtung Folgendes umfasst:
Einstellen eines Verhältnisses des maximalen Abstands zu einer Kantenlänge in einer entsprechenden Richtung als einen Skalierungskoeffizienten in der entsprechenden Richtung.

8. Bildverarbeitungsvorrichtung, die einen Prozessor und eine Speichervorrichtung umfasst, wobei die Speichervorrichtung dazu ausgelegt ist, eine Mehrzahl von Programmcodes zu speichern, **dadurch gekennzeichnet, dass** die Programmcodes dazu ausgelegt sind, durch den Prozessor geladen und ausgeführt zu werden, um das Bildverarbeitungsverfahren nach einem der Ansprüche 1 bis 7 durchzuführen.

9. Endgerät, **dadurch gekennzeichnet, dass** das Endgerät die Bildverarbeitungsvorrichtung nach Anspruch 8 umfasst.

10. Nichtflüchtiges computerlesbares Speichermedium, auf dem eine Mehrzahl von Programmcodes gespeichert ist, **dadurch gekennzeichnet, dass** die Programmcodes dazu ausgelegt sind, durch einen Prozessor geladen und ausgeführt zu werden, um das Bildverarbeitungsverfahren nach einem der Ansprüche 1 bis 7 durchzuführen.

## Revendications

1. Procédé de traitement d'image comprenant :
l'obtention d'une pluralité de points de coin initiaux d'une image de trame actuelle d'un document cible ;
le filtrage de la pluralité de points de coin initiaux dans une plage formée par un polygone prédéfini pour obtenir une pluralité de points de coin disponibles de l'image de trame actuelle, le nombre de points de coin disponibles étant égal au nombre de coins du polygone prédéfini ;
la détermination d'une première distance entre deux quelconques des points de coin disponibles, et l'obtention, sur la base de toutes les premières distances, d'une distance maximale dans chaque direction correspondant au polygone prédéfini, chaque direction correspondant au polygone prédéfini étant déterminée sur la base d'une direction d'extension de chaque bord du polygone prédéfini ;
la détermination d'un coefficient mise à l'échelle dans chaque direction sur la base de la distance maximale dans chaque direction ; et
si chaque coefficient de mise à l'échelle est supérieur à un seuil de coefficient correspondant, la détermination d'un coefficient de mise à l'échelle de l'image de trame actuelle sur la base de chaque coefficient de mise à l'échelle et de son seuil de coefficient correspondant, et la réalisation d'une mise à l'échelle sur l'image de trame actuelle pour obtenir une image cible.

2. Procédé de traitement d'image selon la revendication 1, **caractérisé en ce que** le filtrage de la pluralité de points de coin initiaux dans une plage formée par un polygone prédéfini pour obtenir une pluralité de points de coin disponibles de l'image de trame actuelle comprend :
la réalisation d'un filtrage médian dans un domaine spatial sur la pluralité de points de coin initiaux dans la plage formée par le polygone prédéfini pour obtenir une pluralité de points de coin candidats de l'image de trame actuelle ;
si le numéro de trame correspondant à l'image de trame actuelle est supérieur ou égal à un numéro de trame prédéfini, et que le nombre de points de coin candidats de l'image de trame actuelle est égal au nombre de coins du polygone prédéfini, la détermination d'une deuxième distance entre chaque point de coin candidat de l'image de trame actuelle et un point de coin candidat correspondant d'une image de trame précédente ; et
si la deuxième distance maximale est inférieure à une distance prédéfinie, la réalisation d'un filtrage médian dans un domaine temporel sur des points de coin candidats d'une pluralité d'images de trame dans la plage formée par le polygone prédéfini pour obtenir la pluralité de points de coin disponibles de l'image de trame actuelle, la pluralité d'images de trame comportant l'image de trame actuelle et au moins deux images de trame avant l'image de trame actuelle.

3. Procédé de traitement d'image selon la revendication 1 ou 2, **caractérisé en ce que** le procédé comprend en outre :
si chaque coefficient de mise à l'échelle est supérieur au seuil de coefficient correspondant, la mise à jour de valeurs numériques correspondant aux points de coin candidats de l'image de trame actuelle en valeurs numériques correspondant à la pluralité de points de coin disponibles de l'image de trame actuelle.

4. Procédé de traitement d'image selon l'une quelconque des revendications 1 à 3, **caractérisé en ce que** la détermination d'un coefficient de mise à l'échelle de l'image de trame actuelle sur la base de chaque coefficient de mise à l'échelle et de son seuil de coefficient correspondant, et la réalisation d'une mise à l'échelle sur l'image de trame actuelle pour obtenir une image cible comprend :
la détermination d'un rapport de chaque seuil de coefficient sur un coefficient de mise à l'échelle correspondant, la sélection du rapport minimum en tant que coefficient de mise à l'échelle de l'image de trame actuelle, et la réalisation d'une mise à l'échelle sur l'image de trame actuelle pour obtenir l'image cible.

5. Procédé de traitement d'image selon la revendication 4, **caractérisé en ce que** le procédé comprend en outre :
le stockage du coefficient de mise à l'échelle de l'image de trame actuelle.

6. Procédé de traitement d'image selon l'une quelconque des revendications 1 à 5, **caractérisé en ce que** l'obtention d'une pluralité de points de coin initiaux d'une image de trame actuelle d'un document cible comprend :
sur la base du coefficient de mise à l'échelle ou du coefficient de mise à l'échelle prédéfini correspondant à l'image de trame précédente, la réalisation d'une mise à l'échelle sur l'image de trame actuelle pour obtenir une image de trame actuelle mise à l'échelle ; et
sur la base d'un algorithme de détection de points de coin prédéfinis, l'obtention d'une pluralité de points de coin initiaux de l'image de trame actuelle mise à l'échelle.

7. Procédé de traitement d'image selon l'une quelconque des revendications 1 à 6, **caractérisé en ce que** la détermination d'un coefficient de mise à l'échelle dans chaque direction sur la base de la distance maximale dans chaque direction, comprend :
la définition d'un rapport de la distance maximale sur une longueur de bord dans une direction correspondante en tant que coefficient de mise à l'échelle dans la direction correspondante.

8. Dispositif de traitement d'image, comprenant un processeur et un dispositif de stockage, le dispositif de stockage étant configuré pour stocker une pluralité de codes de programme, **caractérisé en ce que** les codes de programme sont configurés pour être chargés et exécutés par le processeur pour réaliser le procédé de traitement d'image selon l'une quelconque des revendications 1 à 7.

9. Terminal, **caractérisé en ce que** le terminal comprend le dispositif de traitement d'image selon la revendication 8.

10. Support de stockage non transitoire lisible par ordinateur stockant une pluralité de codes de programme sur celui-ci, **caractérisé en ce que** les codes de programme sont configurés pour être chargés et exécutés par un processeur pour réaliser le procédé de traitement d'image selon l'une quelconque des revendications 1 à 7.
